(19) Europäisches Patentamt
European Patent Office
Office européen des brevets

(11) Veröffentlichungsnummer: **0 281 801**
**B1**

(12) **EUROPÄISCHE PATENTSCHRIFT**

(45) Veröffentlichungstag der Patentschrift: **23.01.91**

(21) Anmeldenummer: **88102223.0**

(22) Anmeldetag: **16.02.88**

(51) Int. Cl.$^5$: **C 08 G 18/28,** C 08 G 18/10, C 08 G 18/32, C 07 C 275/06, C 07 C 275/14, C 07 C 275/26, C 07 C 275/40, C 10 G 33/04

# (54) Verwendung von Polyharnstoff-modifizierten Polyetherurethanen als Emulsionsspalter für Wasser-in-Öl-Emulsionen.

(30) Priorität: **26.02.87 DE 3706151**

(43) Veröffentlichungstag der Anmeldung: **14.09.88 Patentblatt 88/37**

(45) Bekanntmachung des Hinweises auf die Patenterteilung: **23.01.91 Patentblatt 91/04**

(84) Benannte Vertragsstaaten: **DE FR GB NL**

(56) Entgegenhaltungen:
**EP-A-0 139 922**
**EP-A-0 141 081**
**DE-B-1 081 225**
**DE-B-2 822 908**
**US-A-4 384 951**

(73) Patentinhaber: **BAYER AG**
**D-5090 Leverkusen 1 Bayerwerk (DE)**

(72) Erfinder: **Scholl, Thomas, Dr.**
**Witzfeldstrasse 47a**
**D-4005 Meerbusch 1 (DE)**
Erfinder: **Perrey, Hermann, Dr.**
**Auf der Rheinaue 8**
**D-4150 Krefeld 11 (DE)**
Erfinder: **Augustin, Thomas, Dr.**
**Kölner Strasse 132**
**D-5090 Leverkusen 3 (DE)**
Erfinder: **Wegner, Christian, Dr.**
**Roggendorfstrasse 67**
**D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 281 801 B1

**Beschreibung**

Die Erfindung betrifft die Verwendung bestimmter Polyharnstoff-modifizierter Polyetherurethane als Spalter für Wasser-in-Öl-Emulsionen, insbesondere als Spalter für Wasser-in-Rohöl-Emulsionen.

Erdöl wird zum überwiegenden Teil in Form wäßriger Emulsionen, vorwiegend in Form wäßriger Emulsionen, vorwiegend in Form von Wasser-in-öl-Emulsionen gefördert, die im allgemeinen stabilisiert sind durch Inhaltsstoffe des Erdöls, sowie durch mitgeförderte feinstteilige Feststoffe aus der Lagerstätte. In dem einemulgierten Wasser sind häufig Salze, z.B. Natriumchlorid, Kalziumchlorid und/oder Magnesiumchlorid, gelöst. Transportkosten, Probleme infolge hoher Viskositäten der Emulsionen und Korrosionsprobleme in den Verarbeitungsanlagen machen es erforderlich, das Rohöl vor seinem Transport und/oder vor seiner Verarbeitung weitgehend zu entwässern, d.h. die geförderte Emulsion zu spalten.

Solche häufig sehr stabilen Emulsionen werden im allgemeinen durch den Zusatz von grenzflächenaktiven Verbindungen, sogenannten Demulgatoren — im folgenden als Emulsionspalter bezeichnet — häufig unterstützt durch Erwärmen der Emulsion und/oder zusätzliches Anlegen elektrischer Felder gespalten.

Maßgebend für die Wirkung von Emulsionsspaltern sind der Restwassergehalt sowie der Salz- und der Feststoffgehalt im abgetrennten Rohöl und der Restölgehalt im abgetrennten Wasser. Angestrebt wird eine Minimierung dieser Werte bei gleichzeitiger Minimierung der Anwendungstemperatur des Emulsionsspalters.

Die bisher zur Spaltung von Rohölemulsionen verwendeten Produkte, z.B. Blockpolymerisate aus Ethylenoxid und/oder 1,2-Propylenoxid (US—PS—2 964 478), oxalkylierte Phenolharze (US—PS—2 499 370 und US—PS—2 499 368) und mit Diisocyanaten, Dicarbonsäuren, Formaldehyd und/oder Diglycidylether vernetzte Block- oder Mischpolymerisate von Ethylen- und 1,2-Propylenoxid (EP—A—55 434 und EP—A—55 433) erfüllen im allgemeinen die Anforderungen nur teilweise. So verläuft die Emulsions-Spaltung häufig langsam oder unvollständig, wenn die Temperaturen nicht relativ hoch sind. Bekannte Emulsionsspalter sind auch nur bei speziellen Emulsionen gut wirksam, nicht allgemein einsetzbar und häufig erst in relativ hohen Dosierungen ausreichend wirksam.

Gegenstand der Erfindung ist die Verwendung von Polyharnstoff-modifizierten Polyetherurethanen der allgemeinen Formel I:

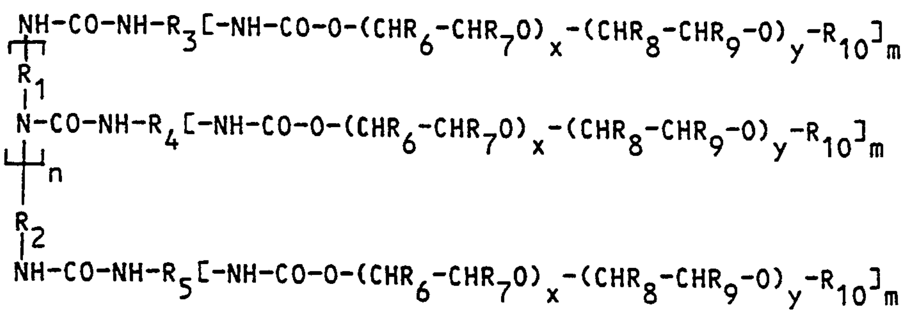

I

in der

$R_1$ und $R_2$ unabhängig voneinander $C_2$ bis $C_{14}$-Alkylen oder $C_3$ bis $C_{14}$-Cycloalkylen,

$R_3$, $R_4$ und $R_5$ unabhängig voneinander gegebenenfalls substituiertes Alkylen, Cycloalkylen oder Arylen,

$R_6$, $R_7$, $R_8$ und $R_9$ unabhängig voneinander Wasserstoff, $C_{1-20}$-Alkyl

$R_{10}$ $C_1$ bis $C_{18}$-Alkyl, $C_6$ bis $C_{18}$-Aryl, $C_7$ bis $C_{18}$-Aralkyl oder $C_2$ bis $C_{18}$-Alkenyl bedeuten,

n für die Zahlen 0 bis 50,

m für die Zahlen 1 bis 4,

x für die Zahlen 5 bis 100 und

y für die Zahlen 0 bis 100 stehen

zur Spaltung von Wasser-in-Rohöl-Emulsionen.

Besonders geeignete Alkylenreste $R_3$, $R_4$ und $R_5$ sind solche mit 1 bis 18 C-Atomen, besonders geeignete Cycloalkylenreste $R_3$, $R_4$ und $R_5$ sind solche mit 5 oder 6 Ringkohlenstoffatomen und besonders geeignete Arylenreste $R_3$, $R_4$ und $R_5$ sind Phenylen- und Naphthylenreste, wobei die genannten Reste beispielsweise Urethan-, Uretdion-, Biuret- oder Isocyanursäurereste enthalten können. Die Aryl- und Cycloalkylreste können ferner durch $C_1$—$C_4$-Alkyl oder Chlor substituiert sein.

Bevorzugt werden erfindungsgemäß Polyetherurethane entsprechend der Formel II verwendet

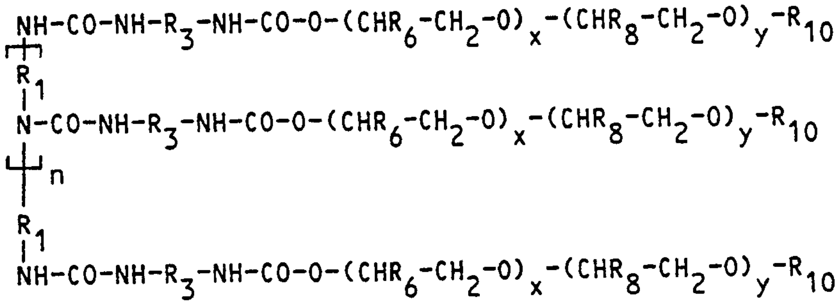

II

in der

$R_1$ $C_2$ bis $C_7$-Alkylen oder $C_5$ bis $C_7$-Cycloalkylen,

$R_3$ $C_6$ bis $C_{20}$-Alkylen oder gegebenenfalls durch $C_1$—$C_4$-Alkyl oder Halogen substituiertes $C_6$—$C_{20}$-Cycloalkylen oder -Arylen,

$R_6$ und $R_8$ Wasserstoff oder Methyl,

$R_{10}$ $C_1$ bis $C_6$-Alkyl bedeuten,

n für die Zahlen 0 bis 5 und

x und y für die Zahlen 5 bis 100 stehen,

wobei die Einheiten ($CHR_6$—$CH_2$—O) und ($CHR_8$—$CH_2$—O) in Blöcken, statistisch verteilt oder teilweise in Blöcken und teilweise statistisch verteilt vorliegen.

Ganz besonders bevorzugt werden erfindungsgemäß Polyetherurethane der Formel II verwendet, in der

$R_1$ für $C_2$ bis $C_3$-Alkylen,

$R_3$ für $C_6$ bis $C_{13}$-Alkylen, gegebenenfalls durch Methyl substituiertes $C_6$ bis $C_{13}$-Cycloalkylen oder $C_6$ bis $C_{13}$-Arylen,

$R_6$ für Wasserstoff,

$R_8$ für Methyl,

n für die Zahlen 1 bis 5,

x für den Zahlen 5 bis 50 und

y für die Zahlen 5 bis 40 stehen,

und die Einheiten ($CH_2$—$CH_2$—O) und ($CH(CH_3)$—$CH_2$—O) statistisch oder teilweise in Blöcken und teilweise statistisch verteilt vorliegen.

Die erfindungsgemäß zu verwendenden polyharnstoffmodifizierten Polyetherpolyurethane erhält man durch Umsetzung von Polyisocyanaten mit Polyethern der Formel III

$$HO—(CHR_6—CHR_7—O)_x—(CHR_8—CHR_9—O)_y—R_{10} \quad \text{III}$$

und Polyaminen der Formel IV

$$NH_2—(R_1—NH)_n—R_2—NH_2, \quad \text{IV}$$

wobei die Reste $R_1$, $R_2$, $R_6$, $R_7$, $R_8$, $R_9$ und $R_{10}$ und die Zahlen m, n, x und y die oben angegebene Bedeutung besitzen.

Die zur Herstellung der polyharnstoffmodifizierten Polyetherpolyurethane verwendeten Polyisocyanate können aliphatisch, cycloaliphatisch oder aromatisch sein. Als Beispiele für geeignete Polyisocyanate seien Hexamethylendiisocyanat, Cyclohexan-1,4-diisocyanat, 2,4- und 2,6-Toluylendiisocyanat und deren Gemische, 1-Isocyanatomethyl-5-isocyanato-1,3,3-trimethylcyclohexan, (2,2,4- bzw. 2,4,4-Trimethylhexamethylendiisocyanat-1,6), 1,5-Naphthalin-diisocyanat, 1,3-Cyclopentylendiisocyanat, m- und p-Phenylen-diisocyanat, 2,4,6-Toluylentriisocyanat, 4,4',4''-Triphenylmethantriisocyanat, 1,3- und 1,4-Xylylendiisocyanat, 3,3'-Dimethyl-4,4'-diphenylmethandiisocyanat, 4,4'-Diphenylmethandiisocyanat, 3,3'-Dimethylbiphenylendiisocyanat, 4,4'-Biphenylendiisocyanat, Durendiisocyanat, 1-Phenoxy-2,4'-phenylendiisocyanat, 1-tert.-Butyl-2,4-phenylendiisocyanat, Methylen-bis-4,4'-cyclohexyldiisocyanat, 1-Chlor-2,4-phenylendiisocyanat und 4,4'-Diphenyletherdiisocyanat genannt.

Weiterhin ist es möglich, höhermolekulare und gegenbenenfalls auch höherfunktionelle Polyisocyanate, die aus niedermolekularen Grundkörpern durch Polymerisationsreaktion zu Uretdionen oder Isocyanuratderivaten hergestellt werden, einzusetzen. Beispielsweise seien das Uretdion aus 2 Mol 2,4-Toluylendiisocyanat und die isocyanuratringhaltigen Polymerisationsprodukte aus 2,4- und 2,6-Toluylendiisocyanat oder Hexamethylendiisocyanat, ein durchschnittlich 2 Isocyanuratringe im Molekül enthaltenes und aus 5 Mol Toluylendiisocyanat gebildetes System oder ein entsprechendes Derivat aus durchschnittlich 2 Mol Toluylendiisocyanat und 3 Mol Hexamethylendiisocyanat, erwähnt.

Nach einer weiteren Aufbaumethode ist est möglich, aus Di- oder Polyisocyanaten durch partielle Hydrolyse über die Stufe der Carbamidsäure und des Amins höhere biuretverknüpfte Systeme herzustellen, z.B. eine biuretverknüpfte Verbindung, die formal aus 3 Mol Hexamethylendiisocyanat unter Zusatz von 1 Mol Wasser und Abspaltung von 1 Mol Kohlendioxid entstanden ist.

Ebenfalls geeignete Polyisocyanate erhält man bei der Umsetzung von Di- oder Polyolen mit di- oder polyfunktionellen Isocyanaten, wenn das Molverhältnis von Hydroxyverbindungen zum Isocyanat so gewählt wird, daß bei den statistisch gebildeten Reaktionsprodukten stets freie NCO-Funktionen vorhanden bleiben und ein molgewicht von 2,000 bis 3,000 nicht überschritten wird. Ähnliche geeignete Polyisocyanate erhält man aus hydroxylgruppenhaltigen Polyestern durch Umsetzung mit überschüssigem di- oder polyfunktionellen Isocyanaten.

Alle oben beschriebenen Di- und Polyisocyanate können in dieser Weise mit Di- und Polyolen, wie Mono- und Polyethylenglykol, Propandiolen, Butandiolen, Neopentylglykol und andere Pentandiolen, Adipol, Hexandiolen, Cyclohexandiolen, 1,4-Dihydroxymethylcyclohexan, Perhydrobisphenol-A, Glycerin, Trimethylolethan, Trimethylolpropan, anderen Hexantriolen und Pentaerythrit, unter den beschriebenen Voraussetzungen umgesetzt werden. Bevorzugt werden die Umsetzungen von Di- und Polyolen mit Toluylendiisocyanat, bei denen pro OH-Funktion 1 Mol des Diisocyanats zur Reaktion kommt.

Bevorzugt werden als Polyisocyanate Diisocyanate, insbesondere Hexamethylendiisocyanat, Isophorondiisocyanat, Toluylendiisocyanat und Diphenylmethandiisocyanat eingesetzt.

Die zur Herstellung der erfindungsgemäß zu verwendenden harnstoffgruppenhaltigen Polyetherurethane verwendeten Polyether erhält man durch Polyalkoxylierung von Alkoholen, Phenolen und Alkylphenolen mit bis zu 18 C-Atomen. Als Alkohole sind hierbei alle gesättigten oder ungesättigten aliphatischen, cycloaliphatischen sowie araliphatischen Hydroxyverbindungen mit 1—18 C-Atomen geeignet, die rein oder in Form von Gemischen zur Polyalkoxylierung eingesetzt werden können.

Als Alkylenoxide zur Polyalkoxylierung kommen z.B. Ethylenoxid, Propylenoxid, 1,2- und 2,3-Epoxybutan Epichlorhydrin, Dodecyloxid oder Stearyloxid.

Bevorzugte Polyether erhält man durch Polyalkoxylierung niederer Alkohole, wie Methanol, Ethanol, Propan-, Butan-, Pentan- oder Hexanole, mit Ethylen- und Propylenoxid. Hierbei können Blockpolymere oder Polymere mit statistischer Verteilung der Oxyalkylgruppen, sog. Mischpolymere, oder auch Mischformen dieser beiden Möglichkeiten hergestellt werden. Bevorzugt sind Mischpolymere und solche Produkte, bei denen die Alkohole zunächst mit einer Mischung aus Propylenoxid und 80 bis 90% der gesamten Menge des Ethylenoxids zu Mischpolymeren umgesetzt werden und hierauf die restlichen 10 bis 20% des Ethylenoxids eingebracht werden, so daß die Endgruppen dieser Polyether nahezu vollständig primäre OH-Gruppen sind. Bevorzugte Polyether enthalten 40 bis 60 Gew.-% Ethylenoxid, besonders bevorzugte sind aus gleichen Gewichtsmengen Ethylen- und Propylenoxid aufgebaut. Bevorzugt werden Polyether mit Molekulargewichten von 600 bis 5,000, besonders bevorzugt mit 700 bis 3,000, eingesetzt.

Als zur Herstellung der erfindungsgemäß zu verwendenden polyharnstoffmodifizierten Polyetherpolyurethane geeignete aliphatische oder cycloaliphatische amine seien Ethylendiamin, Diethylentriamin, Triethylentetramin, Tetraethylenpentamin, Pentaethylenhexamin, Polyethylenimin, 1,2- und 1,3-Propylendiamin, Dipropylentriamin, Tripropylentetramin, Butylendiamin, Hexamethylendiamin, 2,5-Diamino-2,5-dimethylhexan, 2,2,4- und 2,4,4-Trimethyl-1,6-hexandiamin, Cyclohexandiamin, Isophorondiamin, hydrierte Toluylendiamine und hydrierte Diaminodiphenylmethane genannt.

Bevorzugte Polyamine sind tri- und höherfunktionell. Diethylentriamin, Triethylentetramin, Tetraethylenpentamin und Pentaethylenhexamin sind besonders bevorzugt.

Gut geeignet sind auch technische Destillationsrückstände aus der Herstellung dieser Oligoethylenamine. Diese Rückstände enthalten dann zusätzlich verzweigte und/oder cyclische Polyalkylenpolyamine.

Die Umsetzung der Polyisocyanate mit den Polyethern und den Polyaminen kann zwar so durchgeführt werden, daß zu dem vorgelegten Polyisocyanat langsam eine Mischung aus Polyether und Polyamin zugefügt wird oder umgekehrt zu einer Mischung aus Polyether und Polyamin das Polyisocyanat, doch kann diese Verfahrensweise zu unlöslichen Ausscheidungen führen. Daher wird vorzugsweise in zwei Stufen gearbeitet. Zunächst wird der Polyether mit dem Polyisocyanat umgesetzt und hierauf die restlichen Isocyanatgruppen mit dem Polyamin zur Reaktion gebracht.

Bei der Umsetzung des Polyethers mit dem Polyisocyanat wird vorteilhaft das Polyisocyanat vorgelegt und der Polyether zugegeben. Zur Herstellung reproduzierbarer Produkte ist es wichtig, daß die Polyether stets wasserfrei eingesetzt werden. Die Reaktion kann in inerten Lösungsmitteln, wie Benzol, Toluol, Xylol, Chlorbenzol, o-Dichlorbenzol, Aceton und Essigester oder auch lösungsmittelfrei durchgeführt werden; vorzugsweise wird im Temperaturbereich zwischen 0 und 140°C gearbeitet. Alle bei der Urethanbildung wirksamen Katalysatoren (s. Houben-Weyl, Methoden der organischen Chemie, Bd. 14.2, Seite 61, 4. Auflage, 1963), wie Pyridin, Methylpyridin, N,N'-Dimethylpiperazin, N,N-Dimethylbenzylamin oder N,N'-Endoethylenpiperazin, können verwendet werden.

Bei den Formeln I und II handelt es sich um idealisierte Strukturen. Je nach der Reaktivität der Reaktionsteilnehmer kann es zur Ausbildung von Polymergemischen kommen. Werden allerdings Diisocyanate mit Isocyanatgruppen unterschiedlicher Reaktitivät eingesetzt, wie 2,4-Toluylendiisocyanat oder isophorondiisocyanat, so ist es bei der Umsetzung mit den Polyethern möglich, in hohen Ausbeuten zunächst nur die reaktivere Isocyanatgruppe des Moleküls umzusetzen. Die als Nebenreaktion mögliche

Bildung des Reaktionsproduktes aus 2 Mol Polyether und 1 Mol Diisocyanat neben einem Mol freiem Diisocyanat kann durch schonende Reaktionsbedingungen in erheblichem Maße unterdrückt werden, so daß nach der Umsetzung mit den Polyaminen weitgehend die Verbindungen gemäß Formeln I und II erhalten werden.

Werden jedoch Diisocyanate mit Isocyanatgruppen gleicher Reaktivität eingesetzt, wie Hexamethylendiisocyanat oder 4,4'-Diphenylmethandiisocyanat, so kommt es bei der Reaktion mit dem Polyether zu einem Reaktionsgemisch aus 1:1-, 1:2-Additionsprodukt und unumgesetztem Diisocyanat, das nach Reaktion mit dem Polyamin somit zu einem Produktgemisch aus dem 1:2-Additionsprodukt aus 1 Mol Diisocyanat und 2 Mol Polyether, aus Verbindungen gemäß Formel I bzw. II und insbesondere auch aus höhermolekularen Bestandteile werden dadurch aufgebaut, daß Molekülteile, bei denen nicht alle NH-Gruppen des Polyamins über Diisocyanate mit Polyethern verbunden sind, über die noch nicht umgesetzten NH-Gruppen mit den freien Diisocyanaten zu höhermolekularen Polyharnstoffen reagieren. Produkte bei denen die stöchiometrischen Verhältnisse bis zu 30% von den durch die Formeln angegebenen Verhältnissen abweichen, sind aber immer noch gut geeignet. Hierbei sind die stöchiometrischen Verhältnisse bevorzugt, bei denen die molmäßige Summe der OH- und NH- Gruppen gleich der der Isocyanatgruppen ist.

In der regel liegen die erfindungsgemäß zu verwendenden Verbindungen in öllöslicher Form, vor. Da ihre Wirksamkeit als Emulsionsspalter mit guter Verteilung steigt, ist es manchmal zur Verbesserung der Verteilbarkeit angebracht, gängige Emulgatoren, z.B. Alkylarylsulfonate, Alkylsulfate, Fettsäuresalze, Alkylphenol-, Fettalkoholethoxylate oder dergleichen zuzufügen.

Im allgemeinen setzt man bei der erfindungsgemäßen Verwendung die Stoffe der Formel (I) in Mengen von 10 bis 500 ppm bezogen auf die Jeweilige Wasser-in-Rohöl-Emulsion zu. In vielen Fällen wirken die Stoffe der Formel (I) schon dann als Emulsionsspalter, wenn man sie in Mengen von 10 bis 50 ppm, bezogen auf die jeweilige Wasser-in-Rohöl-Emulsion einsetzt. Die erfindungsgemäßen Emulsionsspalter entfalten im allgemeinen ihre Wirkung bei Temperaturen ab ca. 30°C. Die Emulsionen werden schneller oder (bei gleicher Einwirkungszeit) vollständiger als mit bekannten Produkten gespalten. Außerdem sind die erfindungsgemäßen Emulsionsspalter vielseitiger anwendbar.

Zur Anwendung als Emulsionsspalter für Wasser-in-Rohöl-Emulsionen können die Stoffe der Formel (I) als solche eingesetzt werden. Man kann sie aber auch als Lösung in hochsiedenden Lösungsmitteln anwenden, beispielsweise als 10 bis 70 gew.-%ige Lösung in Alkylaromaten, wie Xylol.

Herstellung erfindungsgemäß verwendbarer Polyetherpolyurethane.

Beispiel 1

In eine lösung von 235,9 g eines Polyethers mit der OH-Zahl 21,4, der durch Alkoxylierung von Butanol mit gleichen Gewichtsmengen Ethylenoxid und Propylenoxid hergestellt wurde, und 15,1 g Hexamethylendiisocyanat gibt man 0,02 g Dibutylzinndilaurat und rührt bei 50°C bis der Polyether vollständig abreagiert hat (Kontrolle über Isocyanatzahl). Dann setzt man bei 50°C 3,1 g Diethylentriamin hinzu und läßt ca. 8 h nachreagieren. Man erhält eine schwachgelbe Flüssigkeit.

Beispiel 2

Man verfährt wie in Beispiel 1, ersetzt dabei aber Hexamethylendiisocyanat durch 15,7 g 2,4-Toluylendiisocyanat.

Beispiel 3

Ein Polyetherurethan wird gemäß Beispiel 1 aus 204 g eines Polyethers mit der OH-Zahl 30, der durch Alkoxylierung von Butanol erst mit 38 Gew.-% Ethylen- und 52 Gew.-% Propylenoxid und darauf mit 10 Gew.-% Ethylenoxid hergestellt wurde, 20,2 g Hexamethylendiisocyanat und 4,13 g Diethylentriamin hergestellt.

Beispiel 4

Ein Polyetherurethan wird gemäß Beispiel 1 aus 255 g eines Polyethers mit der OH-Zahl 30, der durch Alkoxylierung von Butanol mit 38 Gew.-% Ethylenoxid und 52 Gew.-% Propylenoxid und später mit 10 Gew.-% Ethylenoxid hergestellt wurde, 26,1 g Toluylendiisocyanat und 5,68 g Tetraethylenpentamin hergestellt.

Beispiel 5

Ein Polyetherurethan wird gemäß Beispiel 1 aus 204 g eines Polyethers mit der OH-Zahl 30, der durch Alkoxylierung von Butanol erst mit 38 Gew.-% Ethylen- und 52 Gew.-% Propylenoxid und darauf mit 10 Gew.-% Ethylenoxid hergestellt wurde, 30 g Methylendiphenyldiisocyanat sowie 4,13 g Diethylentetramin hergestellt.

Erfindungsgemäße Verwendung von Polyetherurethanen zum Spalten von Erdölemulsionen

Die nachfolgenden Beispiele zeigen, daß die erfindungsgemäß zu verwendenden Verbindungen, verglichen mit denen gemäß Stand der Technik, in verschiedenen Rohölemulsionen auch bei geringer Konzentration eine ausgezeichnete Wirksamkeit aufweisen.

Beispiel 6

Rohöltestemulsion bestehend aus einem norddeutschen Rohöl und synthetischem Formationswasser (Salinität 10,9 Gew.-%) mit einem Wassergehalt von 30 Vol-%.

| Emulsionsspalter | | Dosierung ppm | Spalterwirkung (Wasserabscheidung in %) 10′ | 30′ | 1h | 2h | 3h | 4h |
|---|---|---|---|---|---|---|---|---|
| a. | Spalter gemäß Stand der Technik*) | 20 | 3 | 13 | 24 | 27 | 33 | 33 |
| b. | Spalter gemäß Stand der Technik**) | 20 | 17 | 33 | 33 | 37 | 53 | 60 |
| c. | Produkt von Beispiel 1 | 20 | 48 | 61 | 65 | 67 | 72 | 89 |
| d. | Produkt von Beispiel 2 | 20 | 35 | 55 | 64 | 65 | 69 | 85 |
| e. | Produkt von Beispiel 3 | 20 | 47 | 63 | 67 | 67 | 68 | 85 |
| f. | Produkt von Beispiel 4 | 20 | 7 | 24 | 32 | 53 | 65 | 70 |
| g. | Produkt von Beispiel 5 | 20 | 10 | 12 | 21 | 26 | 35 | 63 |
| h. | Blindwert | — | 0 | 0 | 0 | 0 | 0 | 0 |

Die Emulsionsspaltung erfolgte bei einer Temperatur von 40°C.

*) = Umsetzungsprodukt eines Ethylenoxid/Propylenoxid-Blockpolymers 30:70 mit dem Diepoxid von Bisphenol A im Molverhältnis 2,2:1 (analog EP—OS—55 433 und 55 434.

**) = Nonylphenol/Formaldehyd-Harz alkoxyliert mit 4 Mol Propylenoxid und 2 Mol Ethylenoxid pro phenolischer OH-Gruppe (analog US—PS—2 499 370).

Beispiel 7

Rohöltestemulsion bestehend aus einem niederländischen Rohöl und natürlichem Formationswasser (Salinität 7,5 Gew.-%) mit einem Wassergehalt von 51 Vol-%.

| Emulsionsspalter | | Dosierung ppm | Spalterwirkung (Wasserabscheidung in %) 10′ | 30′ | 1h | 2h | 3h | 4h |
|---|---|---|---|---|---|---|---|---|
| a. | Spalter gemäß Stand der Technik*) | 30 | 7 | 46 | 48 | 50 | 51 | 56 |
| b. | Spalter gemäß Stand der Technik**) | 30 | 1 | 3 | 25 | 33 | 41 | 47 |
| c. | Produkt von Beispiel 1 | 30 | 2 | 73 | 74 | 76 | 76 | 77 |
| d. | Produkt von Beispiel 2 | 30 | 8 | 65 | 67 | 67 | 78 | 69 |
| e. | Produkt von Beispiel 3 | 30 | 7 | 67 | 71 | 71 | 73 | 75 |
| f. | Produkt von Beispiel 4 | 30 | 9 | 69 | 71 | 73 | 74 | 75 |
| g. | Produkt von Beispiel 5 | 30 | 8 | 36 | 55 | 55 | 60 | 61 |
| h. | Blindwert | — | 0 | 0 | 0 | 0 | 0 | 0 |

Die Emulsionsspaltung erfolgte bei einer Temperatur von 60°C.

*) = Umsetzungsprodukt eines Ethylenoxid/Propylenoxid-Blockpolymers 30:70 mit dem Diepoxid von Bisphenol A im Molverhältnis 2,2:1 (analog EP—OS—55 433 und 55 434.

**) = Nonylphenol/Formaldehyd-Harz alkoxyliert mit 4 Mol Propylenoxid und 2 Mol Ethylenoxid pro phenolischer OH-Gruppe (analog US—PS—2 499 370).

**Patentansprüche**

1. Verwendung von Polyharnstoff-modifizierten Polyetherurethanen der Formel

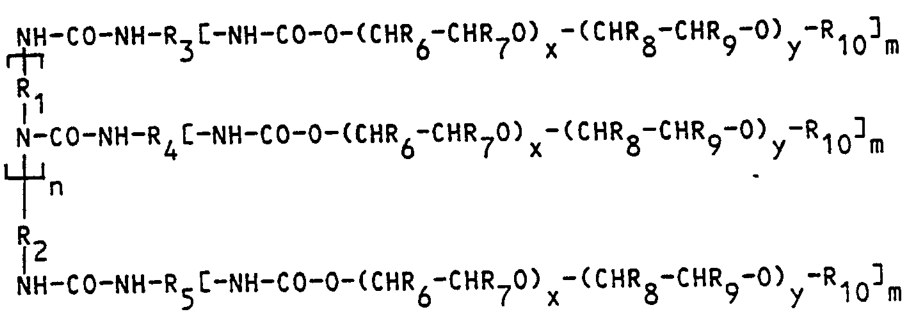

I

in der

$R_1$ und $R_2$ unabhängig voneinander $C_2$ bis $C_{14}$-Alkylen oder $C_3$ bis $C_{14}$-Cycloalkylen,

$R_3$, $R_4$ und $R_5$ unabhängig voneinander gegebenenfalls substituiertes Alkylen, Cycloalkylen oder Arylen,

$R_6$, $R_7$, $R_8$ und $R_9$ unabhängig voneinander Wasserstoff, $C_{1-20}$-Alkyl

$R_{10}$ $C_1$ bis $C_{18}$-Alkyl, $C_6$ bis $C_{18}$-Aryl, $C_7$ bis $C_{18}$-Aralkyl oder $C_2$ bis $C_{18}$-Alkenyl bedeuten,

n für die Zahlen 0 bis 50,

m für die Zahlen 1 bis 4,
x für die Zahlen 5 bis 100 und
y für die Zahlen 0 bis 100 stehen
zur Spaltung von Wasser-in-Rohöl-Emulsionen.

2. Verwendung nach Anspruch 1, dadurch gekennzeichnet, daß die Polyharnstoff-modifizierten Polyetherpolyurethane der Formel II entsprechen

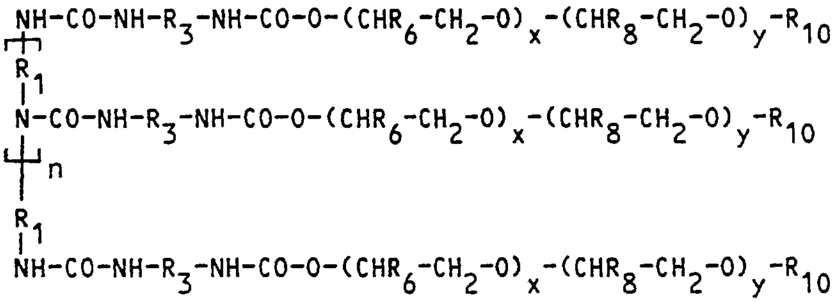

II

in der
$R_1$ $C_2$ bis $C_7$-Alkylen oder $C_5$ bis $C_7$-Cycloalkylen,
$R_3$ $C_6$ bis $C_{20}$-Alkylen oder gegebenenfalls durch $C_1$—$C_4$-Alkyl oder Halogen substituiertes $C_6$—$C_{20}$-Cycloalkylen oder -Arylen,
$R_6$ und $R_8$ Wasserstoff oder Methyl,
$R_{10}$ $C_1$ bis $C_6$-Alkyl bedeuten,
n für die Zahlen 0 bis 5 und
x und y für die Zahlen 5 bis 100 stehen,
wobei die Einheiten ($CHR_6$—$CH_2$—O) und ($CHR_8$—$CH_2$—O) in Blöcken, statistisch verteilt oder teilweise in Blöcken und teilweise statistisch verteilt vorliegen.

3. Verwendung nach Anspruch 2, dadurch gekennzeichnet, daß
$R_1$ für $C_2$ bis $C_3$-Alkylen,
$R_3$ $C_6$ bis $C_{13}$-Alkylen, gegebenenfalls durch Methyl substituiertes $C_6$—$C_{13}$-Cycloalkylen oder $C_6$ bis $C_{13}$-Arylen,
$R_6$ für Wasserstoff,
$R_8$ für Methyl,
n für die Zahlen 1 bis 5,
x für den Zahlen 5 bis 50 und
y für die Zahlen 5 bis 40 stehen,
und die Einheiten ($CH_2$—$CH_2$—O) und ($CH(CH_3)CH_2$—O) statistisch oder teilweise in Blöcken und teilweise statistisch verteilt vorliegen.

**Revendications**

1. Utilisation de polyéther-polyuréthannes à modification polyurée, de formule:

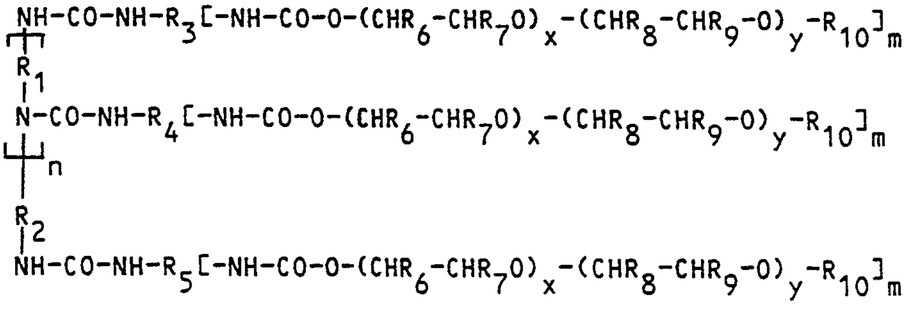

I

dans laquelle
$R_1$ et $R_2$ représentent chacun, indépendamment l'un de l'autre, un groupe alkylène en $C_2$—$C_{14}$ ou cycloalkylène en $C_3$—$C_{14}$,
$R_3$, $R_4$ et $R_5$ représentent chacun, indépendamment les uns des autres, un groupe alkylène, cycloalkylène ou arylène éventuellement substitué,

$R_6$, $R_7$, $R_8$ et $R_9$ représentent chacun, indépendamment les uns des autres, l'hydrogène ou un groupe alkyle en $C_1—C_{20}$,

$R_{10}$ représente un groupe alkyle en $C_1—C_{18}$, aryle en $C_6—C_{18}$, aralkyle en $C_7—C_{18}$ ou alcényle en $C_2—C_{18}$,

n est un nombre allant de 0 à 50,

m est un nombre allant de 1 à 4,

x est un nombre allant de 5 à 100 et

y est un nombre allant de 0 à 100,

pour la rupture des émulsions eau-dans-le pétrole brut.

2. Utilisation selon la revendication 1, caractérisée en ce que les polyéther-polyuréthannes à modification polyurée répondent à la formule II:

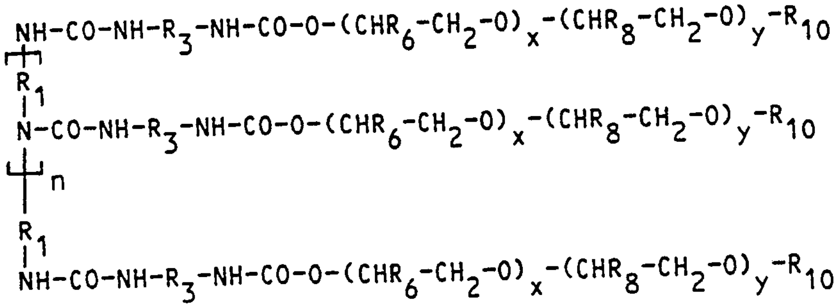

II

dans laquelle

$R_1$ représente un groupe alkylène en $C_2—C_7$ ou cycloalkylène en $C_5—C_7$,

$R_3$ représente un groupe alkylène en $C_6—C_{20}$ ou un groupe cycloalkylène ou arylène en $C_6—C_{20}$ éventuellement substitué par des groupes alkyle en $C_1—C_4$ ou des halogènes,

$R_6$ et $R_8$ représentent l'hydrogène et/ou des groupes méthyle,

$R_{10}$ représente un groupe alkyle en $C_1—C_6$,

n est un nombre allant de 0 à 5 et

x et y sont des nombres allant de 5 à 100,

les motifs ($CHR_6—CH_2—O$) et ($CHR_8—CH_2—O$) étant à l'état de blocs, en répartition statistique ou en partie à l'état de blocs et en partie en répartition statistique.

3. Utilisation selon la revendication 2, caractérisée en ce que:

$R_1$ représente un groupe alkylène en $C_2—C_3$,

$R_3$ représente un groupe alkylène en $C_6—C_{13}$, un groupe cycloalkylène en $C_6—C_{13}$ ou arylène en $C_6—C_{13}$ éventuellement substitué par des groupes méthyle,

$R_6$ représente l'hydrogène,

$R_8$ représente un groupe méthyle,

n est un nombre allant de 1 à 5,

x est un nombre allant de 5 à 50 et

y est un nombre allant de 5 à 40,

et les motifs ($CH_2—CH_2—O$) et ($CH(CH_3)—CH_2—O$) étant en répartition statistique ou en partie à l'état de blocs et en partie en répartition statistique.

**Claims**

1. Use of polyurea-modified polyether polyurethanes of the formula

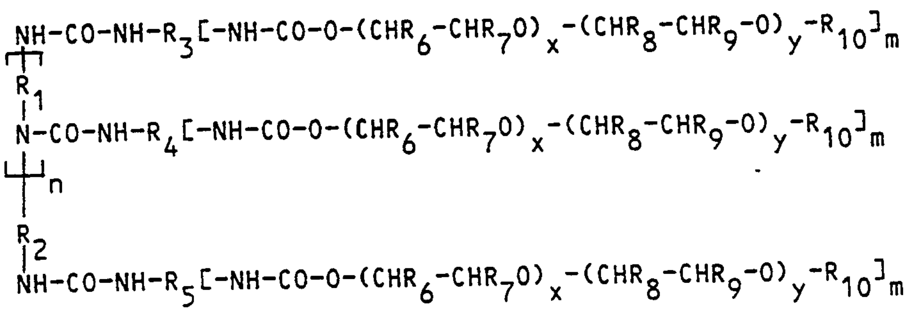

I

in which

$R_1$ und $R_2$ independently of one another denote $C_2$ to $C_{14}$-alkylene or $C_3$ to $C_{14}$-cycloalkylene,

$R_3$, $R_4$ and $R_5$ independently of one another denote optionally substituted alkylene, cycloalkylene or arylene,

$R_6$, $R_7$, $R_8$ and $R_9$ independently of one another denote hydrogen or $C_{1-20}$-alkyl,

$R_{10}$ denotes $C_1$ to $C_{18}$-alkyl, $C_6$ to $C_{18}$-aryl, $C_7$ to $C_{18}$-aralkyl or $C_2$ to $C_{18}$-alkenyl,

n represents the numbers 0 to 50,

m represents the numbers 1 to 4,

x represents the numbers 5 to 100 and

y represents the numbers 0 to 100 for the breaking of water-in-crude oil emulsions.

2. Use according to Claim 1, characterized in that the polyurea-modified polyether polyurethanes correspond to the formula II

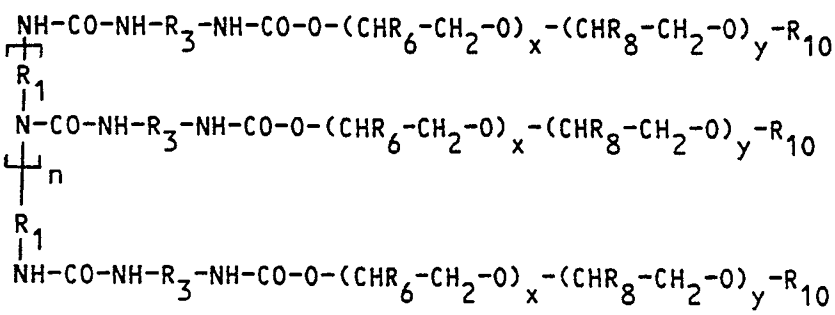

II

in which

$R_1$ denotes $C_2$ to $C_7$-alkylene or $C_5$ to $C_7$-cycloalkylene,

$R_3$ denotes $C_6$ to $C_{20}$-alkylene, or $C_6$—$C_{20}$-cycloalkylene or -arylene, both of which may be optionally substituted by $C_1$—$C_4$-alkyl or halogen,

$R_6$ and $R_8$ denote hydrogen and/or methyl,

$R_{10}$ denotes $C_1$ to $C_6$-alkyl,

n represents the numbers 0 to 5 and

x and y represent the numbers 5 to 100,

where the units ($CHR_6$—$CH_2$—O) and ($CHR_8$—$CH_2$—O) are in blocks, are randomly distributed or are partly in blocks and partly randomly distributed.

3. Use according to Claim 2, characterized in that

$R_1$ represents $C_2$ to $C_3$-alkylene,

$R_3$ represents $C_6$ to $C_{13}$-alkylène, or optionally methyl-substituted $C_6$—$C_{13}$-cycloalkylene or $C_6$ to $C_{13}$-arylene

$R_6$ represents hydrogen

$R_8$ represents methyl,

n represents the numbers 1 to 5,

x represents the numbers 5 to 50 and

y represents the numbers 5 to 40,

and the units ($CH_2$—$CH_2$—O) and ($CH(CH_3)CH_2$—O) are randomly distributed or are partly in blocks and partly randomly distributed.